## Europäisches Patentamt

## European Patent Office

## Office européen des brevets

(19)

(11) Veröffentlichungsnummer: **0 212 447**
**B1**

(12) **EUROPÄISCHE PATENTSCHRIFT**

(45) Veröffentlichungstag der Patentschrift:
31.10.90

(51) Int. Cl.⁵: **G01G 19/02**

(21) Anmeldenummer: 86110860.3

(22) Anmeldetag: 06.08.86

(54) Einrichtung zur Massebestimmung, insbesondere Strassenfahrzeugwaage.

(30) Priorität: 09.08.85 DE 3528726

(43) Veröffentlichungstag der Anmeldung:
04.03.87 Patentblatt 87/10

(45) Bekanntmachung des Hinweises auf die Patenterteilung:
31.10.90 Patentblatt 90/44

(84) Benannte Vertragsstaaten:
AT BE CH DE FR GB LI NL

(56) Entgegenhaltungen:
GB-A- 2 042 742
US-A- 4 203 497
US-A- 4 333 543

(73) Patentinhaber: Pfister GmbH, Stätzlinger Strasse 70,
D-8900 Augsburg(DE)

(72) Erfinder: Häfner, Hans W., Fichtenweg 15,
D-8890 Aichach-Walchshofen(DE)

(74) Vertreter: Kahler, Kurt, Dipl.-Ing.,
Postfach 1249 Gerberstrasse 3, D-8948 Mindelheim(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Einrichtung zur Massebestimmung, insbesondere Straßenfahrzeugwaage

Die Erfindung betrifft eine Einrichtung zur Massebestimmung, insbesondere Straßenfahrzeugwaage gemäß dem Oberbegriff des Patentanspruchs 1.

Straßenfahrzeugwaagen bestehen im allgemeinen aus einer verhältnismäßig großen biegesteifen Platte, vorzugsweise aus Beton, die erdbodengleich in ein Betonfundament eingelassen ist und über Lenkeranordnungen auf mehrere unterhalb der Platte angeordnete Kraftmeßeinrichtungen wirkt. Der Aufwand für derartige Waagen ist somit erheblich.

In der Praxis soll eine Massebestimmung des öfteren an Ladestellen unmittelbar beim Beladen von Straßenfahrzeugen erfolgen, wobei die Ladestellen sich häufig verändern, etwa bei Materialabbau, Materialsilos oder dergleichen. Für solche Anwendungsfälle verbietet sich zwangsläufig der Bau einer üblichen Straßenfahrzeugwaage, so daß ein beliebig beladenes Straßenfahrzeug zu einer Wiegestelle fahren muß, damit festgestellt werden kann, wieviel Gut aufgeladen wurde.

Aus der GB-A 2 042 742 ist eine Straßenfahrzeugwaage bekannt, bei der eine Brücke innerhalb eines rahmenartigen und transportablen Gestells gelagert ist. Die Wägebrücke stützt sich dabei über vier Kraftmeßelemente jeweils an den Eckpunkten der Wägebrücke ab. Da im allgemeinen die zu wiegenden Straßenfahrzeuge wie Lkw eine Fahrzeuglänge von mehreren Metern aufweisen, muß die Brücke die entsprechende Länge aufweisen und dabei zur Vermeidung von Durchbiegungen sehr stabil ausgelegt sein. Die nötige Stabilität der Wägebrücke wird dabei insbesondere durch hochkant angeordnete Stahlträger erreicht, wodurch sich jedoch eine relativ große Bauhöhe der Wägebrücke ergibt. Diese Bauart wird auch in der US-A-4 203 497 beschrieben.

Für ein leichtes Auffahren auf die Straßenfahrzeugwaage müssen steile Auffahrrampen vorgesehen sein oder derartig hohe Wägebrücken in Gruben eingelassen werden, wie dies auch bei der GB-A 2 042 742 beschrieben ist. Eine derartige Straßenfahrzeugwaage eignet sich aufgrund der großen Bauhöhe und der Notwendigkeit, diese in Gruben einbauen zu müssen, nicht für eine rasche Umsetzung der Straßenfahrzeugwaage und den Einsatz auf beliebigem Untergrund.

Aus dem US-Patent 4 333 543 ist weiterhin eine Straßenfahrzeugwaage bekannt, bei der die Wägebrücke allseitig von elastomerem Material umgeben ist, um die Brückenwaage insbesondere bei Einsatz unter rauhen Umweltbedingungen wie Staub und Feuchtigkeit abdichten zu können. Obwohl durch die Anlage der Elastomerschicht an den Kanten der Wägebrücke im Ruhezustand eine Abdichtung erreicht werden kann, wird bei Befahren der Brückenwaage die Wägebrücke abgesenkt, so daß durch den sich bildenden Spalt zwischen umlaufenden Rahmen und umlaufender Elastomerschicht Feuchtigkeit und Schmutz eindringen kann, wodurch die Genauigkeit der Wägung über eine längere Einsatzzeit durch Korrosion beeinflußt werden kann.

Der Erfindung liegt die Aufgabe zu Grunde eine Einrichtung zur Massebestimmung, insbesondere für Straßenfahrzeugwaagen anzugeben, die auf Grund ihres geringen Gewichts und geringer Abmessungen in kürzester Zeit an einer Ladestation aufgestellt und wieder abgebaut werden kann. Der Kostenaufwand soll gering sein, wobei jedoch eine zufriedenstellende Genauigkeit der Wägung zu erreichen ist.

Gemäß der Erfindung wird diese Aufgabe gelöst durch eine Einrichtung mit den Merkmalen des Kennzeichens des Patentanspruchs 1.

Bevorzugte Weiterbildungen der erfindungsgemäßen Einrichtung sind in den abhängigen Ansprüchen gekennzeichnet.

Die erfindungsgemäße Einrichtung bildet eine Art Meßteppich in Form einer allseits hermetisch geschlossenen Brückenwaage. Durch den Einsatz einer Vielzahl kostengünstiger Kraftmeßzellen, insbesondere elastostatischer Kraftmeßzellen, ist eine sehr schlanke Lastbücke mit hoher Steifigkeit zwischen den Meßzellen realisierbar.

Andererseits legt sich der gesamte Körper der Einrichtung durch die geringe Gesamtsteifigkeit über die gesamte Länge auf allen Lastpunkten unter den Meßzellen auf dem Untergrund insbesondere der Fahrbahn auf. Es ist kein eigenes Fundament erforderlich, sondern die Einrichtung kann entweder in ein bereits vorhandenes Betonfundament eingelassen werden, oder wird einfach auf die Fahrbahn gelegt und beispielsweise mit Dübeln befestigt, die ein Verschieben auf der Fahrbahn verhindern. Ein Auffahren erfolgt mittels flach ansteigender Rampen, die mit geringem Aufwand betoniert werden können. Die Einrichtung kann mit Transportösen versehen werden , so daß sie wegen des geringen Eigengewichts z.B. mittels eines Gabelstaplers transportiert werden kann. Die Brücke der Einrichtung ist in den Auflagepunkten biegeelastisch ausgeführt. Zwischen den Auflagepunkten ist die Brücke durch ein Doppelkastenprofil jedoch biegesteif, wodurch die Abdichtung zum Grundrahmen hin mit einem Gummigurt etwa in Form eines üblichen Fördergurtes möglich wird. Zwei Doppelkreuzbandlenker übertragen die Horizontalkräfte von der Brücke auf den Grundrahmen.

Die erfindungsgemäße Einrichtung ist nicht nur für Straßenfahrzeugwaagen sondern überall dort anwendbar, wo verhältnismäßig große Massen unregelmäßig auf eine größere Fläche einwirken.

Weitere Merkmale und Vorteile der erfindungsgemäßen Einrichtung ergeben sich aus der nachstehenden Beschreibung an Hand der Zeichnung. Es zeigen

Figur 1 eine Seitenansicht auf die Längsseite einer Ausführungsform der erfindungsgemäßen Einrichtung,

Figur 2 eine schematische Draufsicht auf die Einrichtung nach Figur 1.

Figur 3 in größerer Einzelheit eine seitliche Schnittansicht eines Teiles der Einrichtung nach Figur 1

Figur 4 eine Schnittansicht der Einrichtung nach Figur 1 längs der Linie IV - IV in Figur 2.

Die als Ausführungsbeispiel gezeigte Einrichtung ist beispiels weise für die linken bzw. rechten Räder eines Lastkraftwagens bestimmt, so daß zum Wiegen des gesamten Fahrzeugs zwei derartige Einrichtungen in entsprechendem Abstand nebeneinander angeordnet werden.

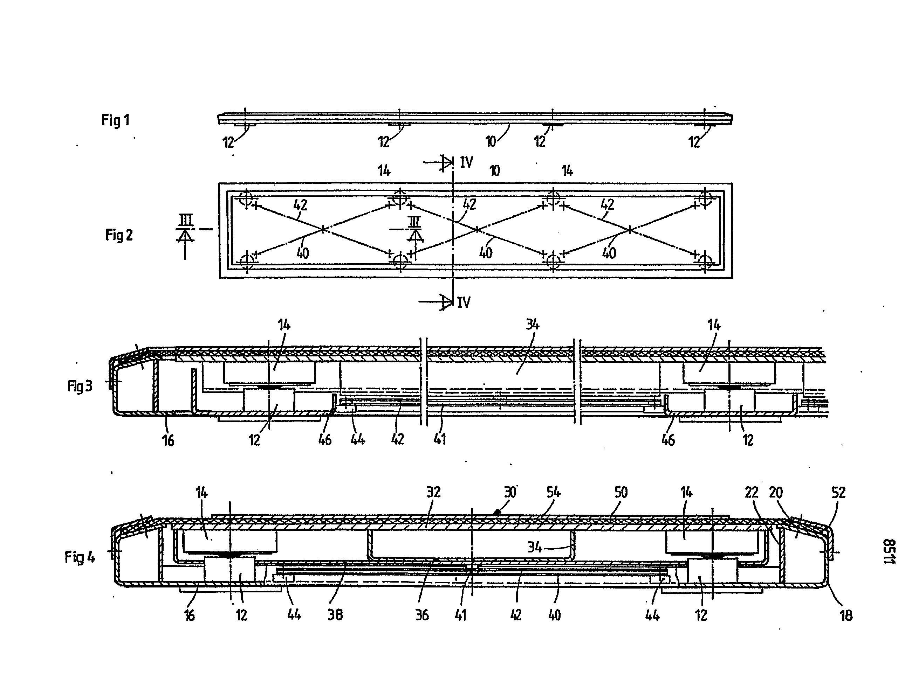

Figur 1 zeigt den sehr schlanken und flachen Grundrahmen 10 mit Auflagepunkten 12, über denen Kraftmeßzellen 14 (vgl. Figur 2-4) angeordnet sind.

Gemäß Figur 2 besitzt der Grundrahmen 10 eine Breite derart, daß auf der Gesamteinrichtung bequem ein Doppelrad Platz hat.

Gemäß den Figuren 3 und 4 besteht der Grundrahmen 10 aus einem ebenen Rahmen 16 aus starkem Blech, der allseitig nach Art eines U-Profils nach oben und innen gezogen ist. Hierdurch ergeben sich Seitenwände 18 und ein oberer Rand 20, der vorzugsweise schräg nach oben innen verläuft. Zur Erhöhung der Steifigkeit des Rahmens wird der Rand an seinem inneren Ende durch eine senkrechte Strebe oder Wand 22 gegen den Bodenrahmen 16 hin abgestützt.

Zur Brücke 30 der Waage gehört die durchgehende, verhältnismäßig stark ausgeführte Brückenplatte 32, die sich über die gesamte Einrichtung innerhalb des Rahmens 10 jedoch ohne Berührung mit diesem erstreckt. Die Brückenplatte erhält Steifigkeit in Längsrichtung durch ein Doppelkastenprofil, das einmal aus einem in Längsrichtung verlaufenden U-Profil 34 besteht, dessen Schenkelenden an der Unterseite der Brückenplatte 32 anliegen, während sein Verbindungsteil 36 sich auf der Oberseite eines zweiten U-Profils 38 abstützt, das wesentlich breiter als das U-Profil 34 ist und dessen Schenkelenden gegen die Unterseite der Brückenplatte und zwar am Rand derselben anliegen. Die Schenkelenden der beiden U-Profile sind mit der Unterseite der Brückeplatte 32 verschweißt.

Es ist zu beachten, daß das zweite U-Profil 38 sich nur in den Bereichen zwischen den Kraftmeßzellen 14 erstreckt, wie dies aus Figur 3 ersichtlich ist. Zwischen den Auflagepunkten 12 ist die Brücke somit biegesteif, während sie in den Auflagepunkten biegeelastisch bleibt.

Den Auflagepunkten 12 gegenüberliegend sind an der Unterseite der Brückenplatte 32 die Kraftmeßzellen 14 angebracht, die in punktförmigem Kontakt mit den Auflagepunkten 12 stehen. Der Abstand der Kraftmeßzellen 14 und damit der Auflagepunkte 12 voneinander richtet sich nach der Größenordnung der zu bestimmenden Massen, sowie der zwischen den Kraftmeßzellen durch das Doppelkastenprofil zu erreichenden Biegesteifigkeit.

Als Kraftmeßzellen werden möglichst flache Kraftmeßzellen verwendet, bevorzugt solche nach der DE-OS 33 44 901. Derartige Kraftmeßzellen zusammen mit dem beschriebenen Aufbau ermöglichen die Ausführung einer äußerst flachen Einrichtung mit einer Gesamtstärke in der Größenordnung von 100 mm. Die Kraftmeßzellen 14 und die Auflagepunkte 12 sind in Längsrichtung zu beiden Seiten der Brückenplatte 32 jeweils in der Nähe ihrer Ränder angeordnet. Falls erwünscht können in Querrichtung auch mehr als zwei Kraftmeßzellen vorgesehen sein.

Zur Aufnahme von Horizontalkräften sind jeweils an der Unterseite der Kastenprofile, in deren Symetriepunkt zwei Doppelkreuzbandlenker 40, 42 schwenkbar befestigt, die sich über Rollen 44 an der Außenseite von im Bereich von der Auflagepunkte 12 angeordneten U-förmigen Querprofilen 46 abstützen.

Von weiterer Bedeutung für die erfindungsgemäße Einrichtung ist eine über die Brückenplatte 32 und den oberen Rand 20 des Grundrahmens gespannte Matte 50 aus Gummi oder geeignetem Kunststoff, nach Art eines Fördergurtes. Diese Matte 50 ist ringsum am oberen Rand 20 des Grundrahmens durch eine Winkelprofilschiene 52 festgespannt, die am Grundrahmen befestigt ist. Hierdurch ergibt sich eine hermetische Abdichtung des Inneren der Einrichtung. Der bei bekannten Brückenwaagen notwendige Schlitz zwischen Brücke und Fundament läßt Feuchtigkeit und Schmutz eindringen, was zwangsläufig zur Beeinträchtigung unterhalb der Brücke angeordneten Einrichtungen führt. Eine gegebenenfalls aus mehreren Elementen bestehende Deckplatte 54 aus starkem Blech ist auf der Matte 50 aufgebracht, etwa aufvulkanisiert oder unter Zwischenschaltung der Matte 50 mit der Brückenplatte 32 verschraubt. Hierdurch wird ein Aufwölben, Verziehen und Abnutzen der Matte 50 beim Auffahren und Bremsen des Fahrzeugs verhindert. Ein Aufwölben kann auch dadurch verhindert werden, daß die Deckplatte 54 bzw. ihre Elemente in der Matte 50 einvulkanisiert sind. Es wäre auch denkbar die Brückenplatte 32 in die Matte 50 einzuvulkanisieren bzw. die Matte 50 stark haftend auf Brückenplatte 32 aufzuvulkanisieren.

Die Unterseite der Einrichtung ist vorzugsweise durch eine verhältnismäßig dünne Blechplatte hermetisch abgeschlossen, so daß auch von hier keine Feuchtigkeit oder Schmutz eindringen kann.

Es sei darauf hingewiesen, daß auch andere geeignete Kraftmeßzellen 14 zum Einsatz kommen können und daß diese auch in umgekehrter Anordnung, d. h. mit ihrer Unterseite auf den Auflagepunkten 12 aufliegend und in punktförmigem Kontakt mit der Unterseite der Brückenplatte 32 angeordnet sein.

Über nicht gezeigte Transportösen kann die Einrichtung auf Grund ihres geringen Eigengewichts von einem Gabelstapler transportiert werden.

Zum Einsatz wird die Einrichtung auf eine meist vorhandene befestigte Unterlage, etwa die Fahrbahn oder eine Betonfläche aufgelegt und beispielsweise mittels Dübeln befestigt.

In Fahrtrichtung vorn und hinten werden dann flach ansteigende Rampen angeordnet, etwa betoniert. Es liegen zwei Einrichtungen im Abstand parallel zueinander. Fährt ein Straßenfahrzeug auf die beiden Einrichtungen dann reagieren die Kraftmeßzellen entsprechend der auf sie ausgeübten Kräfte und die von ihnen erzeugten Signale werden in bekannter Weise zur Bestimmung eines Gesamtgewichts ausgewertet.

An die Stelle der Matte 50 kann auch ein umlaufender flexibler Streifen zur Abdichtung am Rahmen und der Brückenplatte befestigt werden.

## Patentansprüche

1. Einrichtung zur Massebestimmung, insbesondere Straßenfahrzeugwaage mit einer Brücke (30), die beweglich innerhalb eines transportablen, rahmenartigen Gestells (10) angeordnet ist und sich gegen mehrere Auflagepunkte (12) jeweils über Kraftmeßelemente (14) abstützt, dadurch gekennzeichnet, daß mehr als vier Auflagepunkte (12) und Kraftmeßelemente (14) vorgesehen sind, die über die Fläche des Gestells (10) verteilt angeordnet sind und die Brücke (30) im Bereich der Auflagepunkte (12) biegeelastisch und zwischen den Auflagepunkten (12) biegesteif ausgebildet ist.

2. Einrichtung nach Anspruch 1, dadurch gekennzeichnet, daß zwischen einer Brückenplatte (32) der Brücke (30) und dem rahmenartigen Gestell (10) eine flexible Abdichtung (50) angeordnet ist, die allseitig am Gestell (10) befestigt ist.

3. Einrichtung nach Anspruch 2, dadurch gekennzeichnet, daß die flexible Abdichtung (50) eine sich über die Brückenplatte (32) erstreckende Matte (50) ist.

4. Einrichtung nach Anspruch 1, 2 oder 3, dadurch gekennzeichnet, daß die Brückenplatte (32) unterseitig mit einem den mittleren Bereich der Brückenplatte (32) versteifenden Profil versehen ist.

5. Einrichtung nach Anspruch 3 oder 4, dadurch gekennzeichnet, daß in Längsrichtung ein zweites sich im wesentlichen über die ganze Breite der Brückenplatte (32) erstreckendes Profil (38) außerhalb der Bereiche der Kraftmeßelemente (14) an der Unterseite der Brückenplatte (32) befestigt ist.

6. Einrichtung nach einem der vorhergehenden Ansprüche, dadurch gekennzeichnet, daß das rahmenartige Gestell (10) zur Versteifung mit Querstreben (46) versehen ist, auf denen die Auflageelemente (12) angebracht sind.

7. Einrichtung nach Anspruch 6, dadurch gekennzeichnet, daß in Querrichtung mehrere, vorzugsweise zwei Kraftmeßelemente (14) und Auflageelemente (12) angeordnet sind.

8. Einrichtung nach einem der vorhergehenden Ansprüche, dadurch gekennzeichnet, daß das rahmenartige Gestell (10) ein umlaufendes, nach innen offenes, U-förmiges Profil besitzt, das vorzugsweise an seinen Schenkelenden durch ein Querband (22) abgestützt ist.

9. Einrichtung nach Anspruch 8, dadurch gekennzeichnet, daß der obere Schenkel des U-Profils einwärts schräg nach oben verläuft.

10. Einrichtung nach einem der vorhergehenden Ansprüche, dadurch gekennzeichnet, daß die Matte (50) vorzugsweise über den ganzen Umfang des rahmenartigen Gestells (10) auf dessen oberen Schenkel (20) mittels einer Befestigungsvorrichtung (52) festgespannt ist.

11. Einrichtung nach einem der vorhergehenden Ansprüche, dadurch gekennzeichnet, daß die Brückenplatte (32) in die Matte (50) eingeformt, insbesondere einvulkanisiert ist oder in die Matte (50) Plattenelemente (54) einvulkanisiert sind.

12. Einrichtung nach einem der Ansprüche 1 bis 10, dadurch gekennzeichnet, daß auf der Matte (50) mindestens ein Plattenelement (54) aufgebracht, insbesondere aufgeklebt oder aufgeschraubt ist.

13. Einrichtung nach einem der vorhergehenden Ansprüche, dadurch gekennzeichnet, daß in zentralen Positionen (41) zwischen den Kraftmeßelementen (14) an der Unterseite der Brückenplatte (32), insbesondere an der Unterseite der Versteifung (34 bzw. 36) Doppelkreuzbandlenker (42) mit ihren Mitten befestigt sind, während ihre Enden im Bereich der Kraftmeßelemente an dem rahmenartigen Gestell (10), insbesondere seinen Querstreben (46) befestigt sind.

14. Einrichtung nach einem der vorhergehenden Ansprüche, dadurch gekennzeichnet, daß das rahmenartige Gestell (10) mit Transportösen versehen ist.

## Claims

1. Device for the determination of a mass, especially a balance for road vehicles including a bridge (30) movably arranged within a transportable frame-like support (10) and bearing against a plurality of resting points (12) via force measuring elements (14), characterized in that there are provided more than four resting points (12) and force measuring elements (14) distributed over the area of the support (10) and that the bridge (30) is formed elastic in respect of bending in the region of the resting points (12) and rigid in respect of bending between the resting points (12).

2. Device of claim 1, characterized in that between a bridge platform (32) of the bridge (30) and the frame-like support (10) there is provided a flexible sealing (50) peripherally secured to the support (10).

3. Device of claim 2, characterized in that the flexible sealing (50) is a mat (50) extending over the bridge platform (32).

4. Device of claim 1, 2, or 3, characterized in that the bridge platform (32) is provided at its bottom side with a profile stiffening the central region of the bridge platform (32).

5. Device of claim 3 or 4, characterized in that a second profile (38) extending essentially over the total width of the bridge platform (32) is secured to the bottom side of the bridge platform (32) in longitudinal direction outside the regions of the force measuring elements (14).

6. Device of any of the preceding claims, characterized in that the frame-like support (10) for stiffening thereof is provided with cross ribs (46) on which the resting elements (12) are provided.

7. Device of claim 6, characterized in that several, preferably two force measuring elements (14) and resting elements (12) are provided in lateral direction.

8. Device of any of the preceding claims, characterized in that the frame-like support (10) comprises a peripheral U-type profile open toward the interior and preferably supported at its leg ends by a lateral band (22).

9. Device of claim 8, characterized in that the upper leg of the U-profile extends inwards with an upward inclination.

10. Device of any of the preceding claims, characterized in that the mat (50) is clamped preferably around the total periphery of the frame-like support (10) at its upper leg (20) by means of a fixing device (52).

11. Device of any of the preceding claims, characterized in that the bridge platform (32) is incorporated into the mat (50), particularly vulcanized thereinto, or that sheet elements (54) are vulcanized into the mat (50).

12. Device of any of the claims 1 to 10, characterized in that at least one sheet element (54) is applied onto the mat (50), in particular adhered or screwed thereto.

13. Device of any of the preceding claims, characterized in that in central positions (41) between the force measuring elements (14) pairs of cross band links (42) are secured with their centres at the bottom side of the bridge platform (32), in particular at the bottom side of the stiffening (34 or 36, respectively) whilst their ends are secured to the frame-like support (10), in particular its cross ribs (40) in the region of the force measuring elements (14).

14. Device of any of the preceding claims, characterized in that the frame-like support (10) is provided with transport eyes.

**Revendications**

1. Dispositif pour la détermination des masses, en particulier pont-bascule pour véhicules routiers, comprenant un pont (30) qui est disposé en étant mobile à l'intérieur d'un châssis transportable (10) analogue à un cadre et qui s'appuie sur plusieurs points d'appui (12), à chaque fois par l'intermédiaire d'éléments dynamométriques (14), caractérisé par le fait qu'il est prévu plus de quatre points d'appui (12) et de quatre éléments dynamométriques (14) qui sont disposés en étant répartis sur la surface du châssis (10), et que le pont (30) est réalisé de façon à être élastique en flexion dans la région des points d'appui (12) et résistant à la flexion entre les points d'appui (12).

2. Dispositif selon la revendication 1, caractérisé par le fait qu'est disposé entre une plaque de pont (32) du pont (30) et le châssis (10) en forme de cadre un élément d'étanchéité flexible (50) qui est fixé au châssis (10) de tous les côtés.

3. Dispositif selon la revendication 2, caractérisé par le fait que l'élément d'étanchéité flexible (50) est un tapis (50) qui s'étend sur la plaque de pont (32).

4. Dispositif selon la revendication 1, 2 ou 3, caractérisé par le fait que la plaque de pont (32) est munie sur sa face inférieure d'un profilé qui raidit la région centrale de la plaque de pont (32).

5. Dispositif selon la revendication 3 ou 4, caractérisé par le fait qu'un second profilé (38) qui s'étend pour l'essentiel sur toute la largeur de la plaque de pont (32) est fixé en direction longitudinale sur la face inférieure de la plaque de pont (32), à l'extérieur de la région des éléments dynamométriques (14).

6. Dispositif selon l'une des revendications précédentes, caractérisé par le fait que le châssis (10) en forme de cadre est muni, en vue de son raidissement, de traverses (46) sur lesquelles sont montés les éléments d'appui (12).

7. Dispositif selon la revendication 6, caractérisé par le fait qu'une pluralité d'éléments dynamométriques (14) et d'éléments d'appui (12), et de préférence deux, sont disposés dans la direction transversale.

8. Dispositif selon l'une des revendications précédentes, caractérisé par le fait que le châssis (10) en forme de cadre comporte sur son pourtour un profilé en forme de U ouvert vers le haut qui est supporté par une bande transversale (22) aux extrémités supérieures de ses ailes.

9. Dispositif selon la revendication 8, caractérisé par le fait que l'aile supérieure du profilé en U s'étend vers l'intérieur en étant inclinée vers le haut.

10. Dispositif selon l'une des revendications précédentes, caractérisé par le fait que le tapis (50) est serré au moyen d'un dispositif de fixation (52), de préférence sur tout le pourtour du châssis (10) en forme de cadre, sur l'aile supérieure (20) de celui-ci.

11. Dispositif selon l'une des revendications précédentes, caractérisé par le fait que la plaque de pont (32) est moulée dans le tapis (50), en y étant en particulier fixée par vulcanisation, ou que des éléments de plaque (54) sont fixés par vulcanisation dans le tapis (50).

12. Dispositif selon l'une des revendications 1 à 10, caractérisé par le fait qu'au moins un élément de plaque (54) est posé sur le tapis (50), en particulier par collage ou par vissage.

13. Dispositif selon l'une des revendications précédentes, caractérisé par le fait que des doubles barres en croix (42) sont fixées par leur milieu dans des positions centrales (41) entre les éléments dynamométriques (14) sur la face inférieure de la plaque de pont (32), et en particulier sur la face inférieure du raidissement (34 et 36, respectivement), cependant que leurs extrémités sont fixées dans la région des éléments dynamométriques au châssis (10) en forme de cadre, et en particulier à ses traverses (46).

14. Dispositif selon l'une des revendications précédentes, caractérisé par le fait que le châssis (10) en forme de cadre est muni d'anneaux de manutention.

Fig 1

Fig 2

Fig 3

Fig 4